# EUROPÄISCHE PATENTSCHRIFT

(11) **EP 4 044 034 B1**
(45) Veröffentlichungstag und Bekanntmachung des Hinweises auf die Patenterteilung: **25.12.2024**
(21) Anmeldenummer: 22154541.1
(22) Anmeldetag: 01.02.2022
(51) Int. Cl.: G06F 11/18, G06F 11/16, G06F 11/10

(54) **HEIZVORRICHTUNG UND VERFAHREN ZUM BETREIBEN EINER HEIZVORRICHTUNG**
HEATING DEVICE AND METHOD FOR OPERATING SAME
DISPOSITIF DE CHAUFFAGE ET PROCÉDÉ DE FONCTIONNEMENT D'UN DISPOSITIF DE CHAUFFAGE

(30) Priorität: 15.02.2021 DE 102021103505
(43) Veröffentlichungstag der Anmeldung: 17.08.2022
(73) Patentinhaber: ebm-papst Landshut GmbH, 84030 Landshut (DE)
(72) Erfinder: HOLZNER, Markus, 84030 Ergolding (DE); SCHWALME, Jürgen, 84048 Mainburg (DE); WEINGART, Markus, 84056 Rottenburg (DE)
(74) Vertreter: Rüger Abel Patentanwälte PartGmbB

(56) Entgegenhaltungen:
- US-A1- 2006 101 216
- US-A1- 2011 047 440
- ANONYMOUS: "Factory reset - Wikipedia", 10 January 2021 (2021-01-10), pages 1 - 2, XP093041973, Retrieved from the Internet <URL:https://en.wikipedia.org/w/index.php?title=Factory_reset&oldid=999441073> [retrieved on 20230425]

## Beschreibung

Die Erfindung betrifft eine Heizvorrichtung und ein Verfahren zum Betreiben der Heizvorrichtung. Die Heizvorrichtung ist dazu eingerichtet, ein Gebäude oder einen Gebäudeteil zu heizen und/oder mit Warmwasser zu versorgen.

DE 10 2019 117 658 A1 beschreibt eine Heizvorrichtung, die über eine Benutzerschnittstelle entstört werden kann. Die Heizvorrichtung weist eine Steuereinrichtung auf, beispielsweise einen Mikrocontroller. Über den Mikrocontroller kann ein Entstörsignal gelesen werden. Der Mikrocontroller kann einen Speicher aufweisen, in dem Funktionen und/oder Algorithmen gespeichert sind, um das empfangene Entstörsignal in ein Hardwaresignal umzuwandeln. Das Hardwaresignal kann ein analoges Signal, ein elektrisches Spannungssignal und/oder ein elektrisches Stromsignal zur sicherheitsrelevanten Entstörung sein.

US 2006/0101216 A1 betrifft eine Magnetspeicheranordnung (RAID). Die einzelnen Magnetspeicher sind parallel zueinander mit einer Speichersteuerung verbunden, so dass parallel ein Lesezugriff oder Schreibzugriff auf mehrere Speicher möglich ist. Dabei können immer zwei oder mehr der Magnetspeicher dieselben Daten enthalten, um einen Datenverlust zu vermeiden. Die Daten können einer Fehlerprüfung unterzogen werden.

Ein System und Verfahren zur Reaktion auf eine Fehlererkennung ist in US 2011/0047440 A1 beschrieben. Wenn beim Lesen aus einem Speicher ein nicht korrigierbarer Fehler vorliegt, werden die Daten von einem redundanten zweiten Speicher eingelesen. Die vom zweiten Speicher eingelesenen Daten können dann in den ersten Speicher gespeichert werden, um die nicht lesbaren Daten dort zu ersetzen.

Eine moderne Heizvorrichtung wird über eine elektrische und/oder elektronische Steuerung gesteuert. Die Steuerung kann hierfür einen Speicher aufweisen, um Daten zu hinterlegen, die für die Steuerung relevant sind und beim Start der Steuerung geladen und verwendet werden. In der Regel ist es vorteilhaft oder wünschenswert, dass zumindest ein Teil dieser Daten veränderlich ist und an bevorzugte Einstellungen, Betriebszustände, den konkreten Anwendungsfall, usw. angepasst werden kann. In diesem Fall ist es von Bedeutung, die aktuellen Daten bei einem Austausch der Steuerung auszulesen und auf die neue Steuerung zu übertragen. Hierfür werden üblicherweise steckbare Speichermedien verwendet, wie etwa USB-Speicher oder Speicherkarten. Die steckbaren Speicher verbleiben in der Steuereinheit und können beim Austausch einer Steuereinheit umgesteckt werden.

Das Weiterverwenden des steckbaren Speichers beim Austausch der Steuereinheit hat den Nachteil, dass eine Steuereinheit nur durch eine solche neue Steuereinheit ersetzt werden kann, die dieselben Anschlüsse und Verbindungsmittel zur Aufnahme des steckbaren Speichers aufweist. Auch führt das Weiterverwenden des Speichers dazu, dass der Speicher nach dem Austausch der Steuereinheit älter ist als die ausgetauschte, neue Steuereinheit. Dies kann durch Alterung des Speichers zur Beschädigung der Daten oder zum vollständigen Datenverlust führen.

Es kann daher aus Aufgabe der vorliegenden Erfindung angesehen werden, eine Heizvorrichtung und ein Verfahren zu schaffen, das den Austausch einer Steuereinheit vereinfacht und gleichzeitig eine hohe Datensicherheit bereitstellt.

Diese Aufgabe wird durch eine Heizvorrichtung mit den Merkmalen des Patentanspruches 1 und ein Verfahren mit den Merkmalen des Patentanspruches 13 gelöst.

Die Heizvorrichtung gemäß der vorliegenden Erfindung weist ein Heizgerät und eine erste Steuereinheit zur Steuerung des Heizgeräts auf. Das Heizgerät hat einen Brenner, um einen zugeführten Brennstoff zu verbrennen. Als Brennstoff können beispielsweise fossile Brennstoffe dienen, wie etwa Öl oder Gas, Brennstoffe aus Biomasse (z.B. Holz) oder nicht fossile Gase, beispielsweise Wasserstoff oder Synthesegas, oder eine beliebige Kombination davon. Die Heizvorrichtung ist dazu eingerichtet, einen Wärmeträger (z.B. Wasser) zu erwärmen. Der Wärmeträger kann beispielsweise in einem Heizkreislauf zirkulieren und zur Beheizung eines Gebäudes oder Gebäudeteils verwendet werden.

Die erste Steuereinheit hat einen nicht flüchtigen ersten Speicher, in dem ein erster Datensatz abgespeichert ist. Eine zweite Steuereinheit hat einen nicht flüchtigen zweiten Speicher, in dem ein zweiter Datensatz abgespeichert ist. Die zweite Steuereinheit ist zur Steuerung einer Komponente oder Baugruppe der Heizvorrichtung eingerichtet und weist eine sich von der Steuerfunktion der ersten Steuereinheit unterscheidende Steuerfunktion auf. Beispielsweise kann die zweite Steuereinheit zur Steuerung einer Pumpe und/oder eines Gebläses der Heizvorrichtung eingerichtet sein. Die zweite Steuereinheit kann auch zur Steuerung des Heizgeräts bzw. des Brenners verwendet werden, wobei die zweite Steuereinheit im Unterschied zur ersten Steuereinheit beispielsweise sicherheitskritische Parameter steuert oder regelt. Jedenfalls sind die erste Steuereinheit und die zweite Steuereinheit nicht identisch im Hinblick auf ihre Funktion und somit nicht lediglich redundante Steuereinheiten. Die beiden Steuereinheiten sind als separat austauschbare Baugruppen ausgebildet, die jeweils den zugeordneten Speicher aufweist. Jede Baugruppe kann beispielsweise einen Träger (z.B. Leiterplatte) und darauf angeordnete Bauteile aufweisen, beispielsweise jeweils einen Mikrocontroller, den Speicher und gegebenenfalls eine Kommunikations- bzw. Datenbusschnittstelle.

Die erste Steuereinheit und die zweite Steuereinheit sind kommunikationsverbunden, beispielsweise über einen Datenbus. An dem Datenbus können auch weitere Komponenten der Heizvorrichtung angeschlossen sein, wie etwa weitere Steuereinheiten und/oder Sensoren.

Nach ihrer Aktivierung nach der Erstinstallation oder im Anschluss an eine Instandhaltung oder Reparatur ist die erste Steuereinheit dazu eingerichtet, die nachfolgend beschriebenen Schritte auszuführen:

Zunächst werden der erste Datensatz aus dem ersten Speicher und der zweite Datensatz aus dem zweiten Speicher gelesen, wobei die Reihenfolge des Lesens der Datensätze variieren kann. Sowohl der ersten Datensatz, als auch der zweite Datensatz werden dann geprüft. Dabei wird jeder Datensatz separat geprüft. Das Überprüfen der Datensätze separat voneinander erfolgt durch ein Prüfwertverfahren (z.B. zyklische Redundanzprüfung, abgekürzt: CRC). Wurde bei der Prüfung anhand des Prüfwerts festgestellt, dass zumindest einer der Datensätze korrekt bzw. fehlerfrei gelesen wurde, kann basierend auf diesen korrekten Datensatz der eventuell nicht korrekte anderer Datensatz korrigiert werden. Dies entfällt, wenn beide Datensätze korrekt sind und übereinstimmen. Konnte kein korrekter Datensatz ermittelt werden, werden der erste Datensatz und der zweite Datensatz neu erstellt. Dazu kann beispielsweise auf im ersten Speicher und/oder im zweiten Speicher abgelegte Werksdaten und/oder Initialisierungsabläufe zugegriffen werden. Die so erstellten Datensätze werden anschließend gespeichert, wobei der erste Datensatz im ersten Speicher und der zweite Datensatz im zweiten Speicher abgespeichert werden. Die erstellten und gespeicherten Datensätze sind identisch.

Bei diesem Verfahren können die Steuereinheiten ohne mobilen, steckbaren Speicher realisiert werden. Wenn beispielsweise die erste Steuereinheit nach einer Reparatur ausgetauscht wurde, kann sie nach ihrer Aktivierung den zweiten Datensatz aus dem zweiten Speicher lesen. Im ersten Speicher ist noch kein gültiger erster Datensatz vorhanden, so dass der erste Datensatz als nicht korrekt identifiziert wird. Ist der zweite Datensatz korrekt, werden dessen Daten als erster Datensatz ebenfalls im ersten Speicher gespeichert, so dass wieder identische Datensätze in den Speichern vorliegen.

Es ist vorteilhaft, wenn die Heizvorrichtung außerdem ein Gebläse zur Erzeugung einer Gasströmung durch das Heizgerät aufweist. Dabei kann die zweite Steuereinheit zur Steuerung des Gebläses eingerichtet sein und sozusagen eine Gebläsesteuereinheit bilden.

Der erste Datensatz und der zweite Datensatz können bei einem Ausführungsbeispiel Steuerdaten für den Betrieb des Heizgeräts enthalten. Dabei kann es vorteilhaft sein, wenn die erste Steuereinheit dazu eingerichtet ist, nach ihrer Aktivierung außerdem die nachfolgend beschriebenen Schritte auszuführen: Wenn bei der Prüfung ein korrekter Datensatz erkannt wurde, kann dieser korrekte Datensatz geladen und dessen Steuerdaten in der ersten Steuereinheit zum Betrieb des Heizgeräts verwendet werden. Wenn bei der Prüfung kein korrekter Datensatz erkannt wurde, kann der neu erstellte Datensatz geladen und dessen Steuerdaten in der ersten Steuereinheit zum Betrieb des Heizgeräts verwendet werden.

Die von der ersten Steuereinheit nach der Aktivierung durchgeführten Schritte können zusätzlich auch während des Betriebs der Heizvorrichtung ausgeführt werden, beispielsweise wenn auf eine Anforderung (z.B. Interruptsignal) vorliegt und/oder zyklisch.

Die erste Steuereinheit kann außerdem dazu eingerichtet sein, während des Betriebs der Heizvorrichtung regelmäßig oder nach dem Empfang eines entsprechenden Signals, die Daten des ersten Datensatzes und des zweiten Datensatzes zu aktualisieren, mit dem Ziel, dass die beiden Datensätze immer identische Dateninhalte aufweisen. Wird bei der Übertragung oder der Speicherung ein Fehler erzeugt, kann dies bei der Prüfung der Datensätze durch die erste Steuereinheit erkannt werden, wie es vorstehend beschrieben wurde.

Es ist außerdem vorteilhaft, wenn die erste Steuereinheit dazu eingerichtet ist, den aktuell der ersten Steuereinheit zum Betrieb des Heizgeräts verwendeten Datensatz auf Anforderung zu ändern. Beispielsweise kann diese Anforderung durch ein über eine Bedienschnittstelle erzeugtes Anforderungssignal an die erste Steuereinheit übertragen werden. Die Bedienschnittstelle und die erste Steuereinrichtung sind hierzu kommunikationsverbunden, beispielsweise über einen Datenbus. Das Anforderungssignal kann auch zusätzlich oder alternativ über eine andere externe Einheit, ein Netzwerk, das Internet oder dergleichen an die erste Steuereinheit übertragen werden. Anschließend kann der geänderte Datensatz als erster Datensatz im ersten Speicher und als zweiter Datensatz im zweiten Speicher gespeichert werden.

Es ist auch vorteilhaft, wenn jeder Datensatz Lebensdauerdaten einer Komponente der Heizvorrichtung und insbesondere des Heizgeräts enthält. Beispielsweise können Lebensdauerdaten einer Gasventileinheit in den Datensätzen enthalten sein. Bei den Lebensdauerdaten kann es sich beispielsweise um die Anzahl von Schaltzyklen, Datumsinformationen, Betriebsdauern, Betriebsdauern in bestimmten Betriebszuständen und dergleichen handeln. Auch Lebensdauerdaten anderer Komponenten, wie beispielsweise eines Gebläses, können zusätzlich oder alternativ in den Datensätzen enthalten sein.

Jeder Datensatz enthält einen Prüfwert, der nach einer vorgegebenen Rechenvorschrift aus Nutzdaten (insbesondere Lebensdauerdaten und/oder Steuerdaten) des Datensatzes ermittelt wurde. Anhand eines solchen Prüfwerts kann jeder Datensatz separat dahingehend geprüft werden, ob er korrekt gespeichert und/oder übertragen wurde. Der Prüfwert kann durch ein beliebiges geeignetes mathematisches Verfahren erzeugt werden, die die Rechenvorschrift darstellt, beispielsweise basierend auf einer zyklischen Redundanzprüfung (Cyclic Redundancy Check, abgekürzt: CRC).

Bevorzugt ist die erste Steuereinheit dazu eingerichtet, bei der Prüfung der Datensätze den Prüfwert jedes Datensatzes aus dessen Nutzdaten basierend auf der vorgegebenen Rechenvorschrift zu berechnen und mit dem im Datensatz gespeicherten Prüfwert zu vergleichen, so dass jeder Datensatz individuell auf korrekte Speicherung bzw. Übertragung geprüft werden kann. Es ist außerdem bevorzugt, wenn die Datensätze im Rahmen der Prüfung miteinander auf Identität geprüft werden.

Es ist auch vorteilhaft, wenn drei oder mehr separate Datensätze in jeweils einem Speicher vorhanden sind, so dass eine zusätzliche Redundanz für die Nutzdaten in den Datensätzen gegeben ist und/oder durch Vergleich und sogenanntes "Voting" eine Fehlertoleranz erreicht werden.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. In den Zeichnungen zeigen:

Figuren 1 und 2 jeweils ein Blockschaltbild eines Ausführungsbeispiels einer Heizvorrichtung,

Figur 3 ein Blockschaltbild einer ersten Steuereinheit mit einem ersten Speicher, einer zweiten Steuereinheit mit einem zweiten Speicher und einer dritten Steuereinheit mit einem dritten Speicher, die miteinander über einen Datenbus kommunikationsverbunden sind,

Figur 4 ein Flussdiagramm eines Ausführungsbeispiels eines erfindungsgemäßen Verfahrens, das durch die erste Steuereinheit der Heizvorrichtung ausgeführt werden kann und

Figur 5 eine schematische Darstellung eines Datensatzes aufweisend Nutzdaten sowie einen Prüfwert.

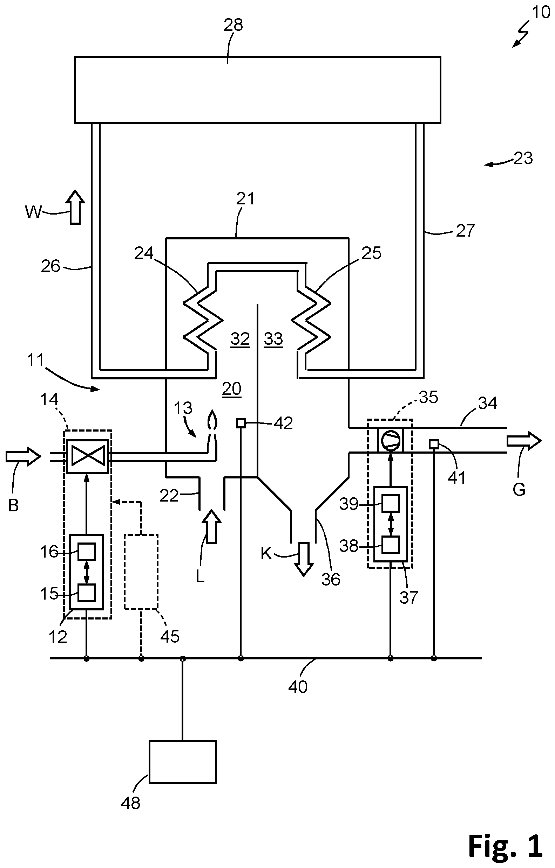

Figur 1 zeigt ein Blockschaltbild eines Ausführungsbeispiels einer Heizvorrichtung 10. Die Heizvorrichtung 10 hat ein Heizgerät 11, das von einer ersten Steuereinheit 12 gesteuert wird. Beim Ausführungsbeispiel weist das Heizgerät 11 einen Brenner 13 und eine Ventileinheit 14 auf. Beim Ausführungsbeispiel wird die Ventileinheit 14 durch die erste Steuereinheit 12 angesteuert, um die Zufuhr eines Brennstoffes B zum Brenner 13 zu steuern. Als Brennstoff B kommen insbesondere flüssige und/oder gasförmige Brennstoffe in Betracht, beispielsweise Öl, Erdgas, Flüssiggas, Wasserstoff, usw. oder eine beliebige Kombination davon.

Die erste Steuereinheit 12 hat einen nicht flüchtigen ersten Speicher 15 sowie einen ersten Mikrocontroller 16. Der erste Mikrocontroller 16 ist dazu eingerichtet, Daten aus dem ersten Speicher 15 auszulesen, Daten zu verändern und Daten im ersten Speicher 15 zu speichern. Im ersten Speicher kann ein erster Datensatz DS1 abgespeichert sein oder werden. Die erste Steuereinheit 12 mit dem ersten Mikrocontroller 16 und dem ersten Speicher 15 können als Baugruppe mit der Ventileinheit 14 ausgebildet sein.

Der Brenner 13 ist in einem Brennraum 20 angeordnet, der im Innenraum eines Gehäuses 21 angeordnet ist. In den Brennraum 20 strömt ein Oxidant ein, der mit dem Brennstoff B gemischt wird, wobei das Gemisch durch den Brenner 13 verbrannt und dadurch eine Strömung von heißen Verbrennungsgasen im Innenraum des Gehäuses 21 erzeugt wird. Als Oxidant wird beim Ausführungsbeispiel Luft L über eine Zufuhröffnung 22 zugeführt. Anstelle von Luft L könnte auch Sauerstoff und/oder ein Sauerstoff-Luft-Gemisch zugeführt werden.

Die Strömung aus heißen Verbrennungsgasen strömt innerhalb des Gehäuses 21 über wenigstens eine Wärmeübertragereinheit eines Heizkreislaufs 23. Die Heizvorrichtung 10 kann beispielsweise als Heizwert- oder Brennwertvorrichtung ausgebildet sein. Innerhalb des Gehäuses 21 in Strömungsrichtung der heißen Verbrennungsgase sind daher eine erste Wärmeübertragereinheit 24 sowie eine zweite Wärmeübertragereinheit 25 angeordnet. Die erste Wärmeübertragereinheit 24 ist mit einer Zulaufleitung 26 fluidisch verbunden. Die zweite Wärmeübertragereinheit 25 ist mit einer Rücklaufleitung 27 des Heizkreislaufs 23 fluidisch verbunden.

Zu dem Heizkreislauf 23 gehört außerdem eine Wärmeabgabeanordnung 28 mittels der Wärme an Gebäude oder Gebäudeteile abgegeben wird. Die Wärmeabgabeanordnung 28 kann Heizkörper und/oder Heizschlangen einer Flächenheizung, beispielsweise Fußbodenheizung, und dergleichen aufweisen. Durch den Heizkreislauf 23 strömt ein Wärmeträgermedium W von der ersten Wärmeübertragereinheit 24 über die Zulaufleitung 26 zur Wärmeabgabeanordnung 28, wobei das Wärmeträgermedium W beim Durchströmen der Wärmeabgabeanordnung 28 Wärme abgibt und sich abkühlt. Das abgekühlte Wärmeträgermedium W strömt über die Rücklaufleitung 27 zur zweiten Wärmeübertragereinheit 25 und von dort weiter zur ersten Wärmeübertragereinheit 24.

Der Gehäuseinnenraum des Gehäuses 21 ist beispielsgemäß in eine erste Zone 32 und eine zweite Zone 33 unterteilt. In der ersten Zone 32 befindet sich der Brennraum 20 sowie die erste Wärmeübertragereinheit 24. Die zweite Zone 33 ist in Strömungsrichtung der heißen Verbrennungsgase stromabwärts zur ersten Zone 32 angeordnet. In der zweiten Zone 33 befindet sich die zweite Wärmeübertragereinheit 25. Ein Abgaskanal 34 mündet in die zweite Zone 33. In dem Abgaskanal 34 ist ein Gebläse 35 angeordnet, das die erzeugten Verbrennungsgase G bzw. Abgase aus dem Innenraum des Gehäuses 21 und beispielsgemäß der zweiten Zone 33 absaugt und durch den Abgaskanal 34 abgibt. Durch die erzeugte Gasströmung wird der Oxidant und beim Ausführungsbeispiel Luft L über die Zufuhröffnung 22 in den Brennraum 20 im Innenraum des Gehäuses 21 angesaugt.

Alternativ zu dieser Ausführungsform kann das Gebläse 35 auch an einer anderen Stelle im Strömungsweg angeordnet sein, beispielsweise im Bereich der Zufuhröffnung 22.

Wenn im Betrieb das heiße Verbrennungsgas entlang der zweiten Wärmeübertragereinheit 25 strömt, kann es sich unterhalb des Taupunkts von einigen oder allen Verbrennungsgasbestandteilen abkühlen, so dass ein Kondensat K entsteht, das über einen Kondensatablauf 36 aus dem Gehäuse 21 bzw. der zweiten Zone 33 abgegeben werden kann.

Zur Steuerung des Gebläses 35 ist eine zweite Steuereinheit 37 vorhanden, die einen zweiten Speicher 38 und einen zweiten Mikrocontroller 39 aufweist. Der zweite Mikrocontroller 39 kann Daten aus dem zweiten Speicher 38 auslesen und Daten im zweiten Speicher 38 speichern. Im zweiten Speicher 38 kann ein zweiter Datensatz DS2 abgespeichert sein oder werden. Die zweite Steuereinheit 37 mit dem zweiten Mikrocontroller 39 und dem zweiten Speicher 38 ist vorzugsweise als Baugruppe mit dem Gebläse 35 (Motor, Rotor, Gehäuse, usw.) ausgebildet.

Die erste Steuereinheit 12 und die zweite Steuereinheit 37 sind kommunikationsverbunden, beispielsgemäß über einen Datenbus 40.

Zusätzlich zu der ersten Steuereinheit 12 und der zweiten Steuereinheit 37 kann die Heizvorrichtung 10 wenigstens eine weitere Steuereinheit und/oder wenigstens einen Sensor aufweisen, die mit der ersten Steuereinheit 12 und/oder der zweiten Steuereinheit 37 kommunikationsverbunden sind, beispielsweise mittels des Datenbusses 40. Beim Ausführungsbeispiel ist ein Abgassensor 41 vorhanden, der in der zweiten Zone 33 oder im Abgaskanal 34 angeordnet werden kann. Über den Abgassensor 41 kann wenigstens eine Eigenschaft des Verbrennungsgases G erfasst werden, beispielsweise die Temperatur und/oder das Vorhandensein wenigstens eines Gasbestandteils des Verbrennungsgases und/oder die Menge wenigstens eine Gasbestandteils des Verbrennungsgases G. Zusätzlich oder alternativ kann im Bereich des Brenners 30 bzw. im Brennraum 20 ein Verbrennungssensor 42 vorhanden sein, der dazu eingerichtet ist, das Vorhandensein einer Flamme am Brenner 13 zu erfassen und/oder den Zustand der Verbrennung im Brennraum 20 zu erfassen. Basierend auf den erzeugten Sensorsignalen des wenigstens einen Sensors 41, 42 kann die erste Steuereinheit 12 das Heizgerät 11 und/oder die zweite Steuereinheit 37 das Gebläse 35 steuern. Der von einem oder mehreren der Sensoren 41, 42 erfasste Istwert kann auch als Rückführungsgröße in einer Verbrennungsregelung verwendet werden.

Wie es gestrichelt in Figur 1 dargestellt ist, kann eine weitere, dritte Steuereinheit 45 vorhanden sein und beispielsgemäß dazu eingerichtet sein, das Heizgerät 11 zu steuern. Dabei unterscheidet sich die Steuerfunktion der ersten Steuereinheit 12 von der der dritten Steuereinheit 45. Zum Beispiel kann die dritte Steuereinheit 45 eine sogenannte "Safety Control Unit (SCU)" darstellen. Die erste Steuereinheit 12 führt dabei die herkömmliche Verbrennungssteuerung oder Verbrennungsregelung durch, während die dritte Steuereinheit 45 eine zusätzliche Sicherheitsfunktion erfüllt und beispielsweise sicherheitskritische Zustände der Heizvorrichtung 10 ausschließt, beispielsweise wenn ein Fehler in der ersten Steuereinheit 12 oder an anderen Komponenten der Heizvorrichtung 10 auftritt. Die dritte Steuereinheit 45 kann als separate Hardware mit einem separaten Speicher und einem separaten Mikrocontroller ausgebildet sein oder virtuell als Funktion in einer der vorhandenen anderen Steuereinheiten 12, 37 realisiert sein. Eine integriert ausgebildete Steuereinheit umfassend die erste Steuereinheit 12 und die dritte Steuereinheit 45 kann als "Burner Control Unit (BCU)" bezeichnet werden.

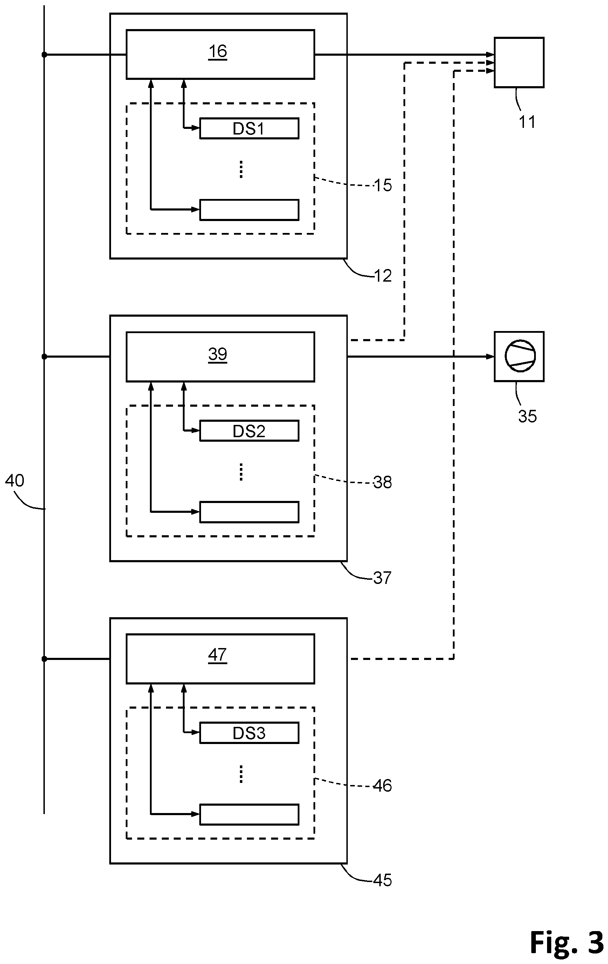

Wenn die dritte Steuereinheit 45 als separate Hardware realisiert ist, kann sie einen dritten Speicher 46 und einen dritten Mikrocontroller 47 aufweisen. Der dritte Mikrocontroller 47 ist dazu eingerichtet, auf den dritten Speicher 46 zuzugreifen und kann Daten aus dem dritten Speicher 46 auslesen und Daten in den dritten Speicher 46 schreiben. Im dritten Speicher 46 kann ein dritter Datensatz DS3 abgespeichert sein (Figur 3).

Beim Ausführungsbeispiel ist eine Bedienschnittstelle 48 mit wenigstens einer Steuereinheit und insbesondere der ersten Steuereinheit 12 kommunikationsverbunden. Es ist möglich, die Bedienschnittstelle 48 und zumindest eine der anderen Steuereinheiten 12, 37, 45 oder zwei oder mehr der Steuereinheiten 12, 37, 45 als gemeinsame Steuereinheit oder Baueinheit auszuführen. Beispielsweise kann die erste Steuereinheit 12 mit dem ersten Mikrocontroller 16 und dem ersten Speicher 15 Bestandteil der Bedienschnittstelle 48 sein und/oder die zweite Steuereinheit 37 mit dem zweiten Mikrocontroller 39 und dem zweiten Speicher 38 kann Bestandteil der Bedienschnittstelle 48 sein.

Auch die Bedienschnittstelle 48 kann als eine weitere Steuereinheit mit einem weiteren Speicher verwendet werden. Beim Ausführungsbeispiel ist die Bedienschnittstelle 48 über den Datenbus 40 mit sämtlichen anderen Steuereinheiten 12, 37, 45 und/oder Sensoren 41, 42 kommunikationsverbunden. Über die Bedienschnittstelle 48 kann ein Bediener Informationen erhalten und/oder Daten eingeben. Beispielsweise kann die Bedienschnittstelle 48 eine Anzeige und wenigstens ein Eingabefeld aufweisen. Die Anzeige und das Eingabefeld können als Baueinheit in Form eines berührungsempfindlichen Bildschirms ausgebildet sein. Die Bedienschnittstelle 48 kann auch akustische Ausgabemittel und Tasten oder Knöpfe als Eingabemittel aufweisen.

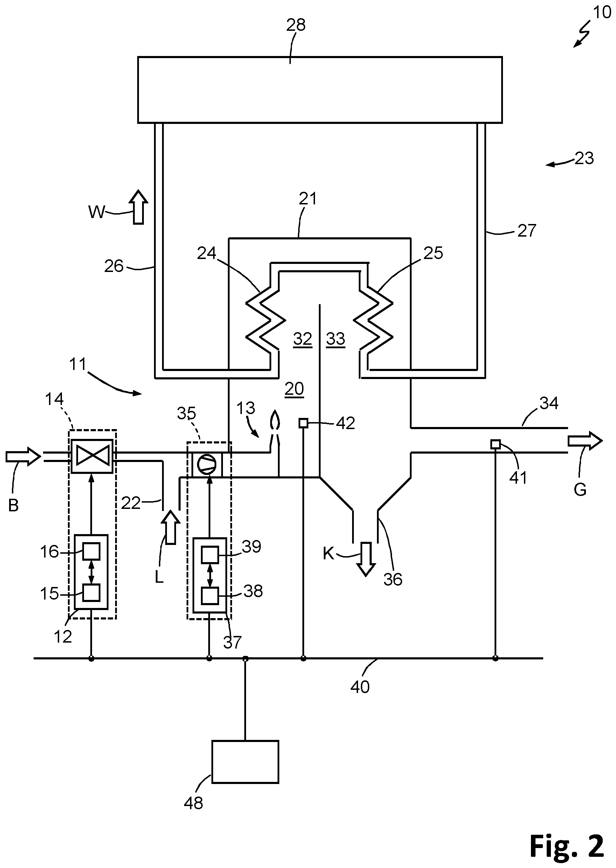

Figur 2 zeigt ein weiteres Ausführungsbeispiel der Heizvorrichtung 10. Im Unterschied zu der in Figur 1 dargestellten Ausführungsform ist das Gebläse 35 als Vormischgebläse ausgeführt, das einen gasförmigen Brennstoff B und einen Oxidanten, beispielsgemäß Luft L, ansaugt, mischt und dem Brenner 13 zuführt.

Bei sämtlichen Ausführungsbeispielen können die Steuereinheiten 12, 37 Bestandteil der jeweiligen Komponente, also der Ventileinheit 14 bzw. das Gebläse 35 sein, was in den Figuren 1 und 2 durch die gestrichelte Umrandung veranschaulicht ist. Analog zum Ausführungsbeispiel der Figur 1 kann eine zusätzliche dritte Steuereinheit 45 vorhanden sein. Bei allen Ausführungsbeispielen können eine oder mehrere Steuereinheiten 12, 37, 45, 48 miteinander kombiniert bzw. integriert ausgebildet sein. Beispielsweise kann die Bedienschnittstelle 48 und die erste Steuereinheit 12 und optional auch die dritte Steuereinheit 45 als gemeinsame Steuereinheit für das Heizgerät 11 ausgeführt sein.

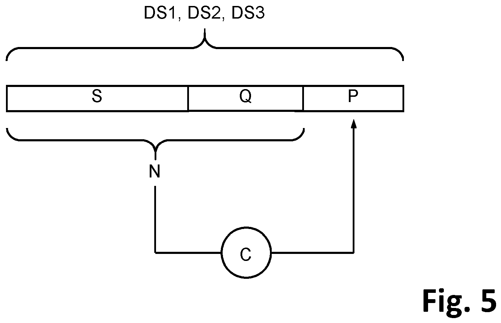

In Figur 5 ist schematisch der Aufbau eines Datensatzes DS1, DS2, DS3 veranschaulicht. Jeder Datensatz enthält Nutzdaten N, die beim Ausführungsbeispiel Steuerdaten S und/oder Lebensdauerdaten Q aufweisen können. Die Steuerdaten S betreffen Parameter, die zur Steuerung oder Regelung verwendet werden, beispielsweise Sollwerte, Grenzwerte, Steuer- oder Regelkennlinien usw. Die Lebensdauerdaten Q betreffen Lebensdauerdaten von einer oder mehrerer Komponenten der Heizvorrichtung 10, beispielsweise von der Ventileinheit 14 und/oder dem Gebläse 35. Die Lebensdauerdaten Q der Ventileinheit 14 können beispielsweise die Anzahl der Schaltzyklen und/oder die Anzahl der Schrittbewegungen eines Schrittmotors und/oder Datumsinformationen und/oder Betriebsdauern in bestimmten Schaltzuständen und/oder die Gesamtbetriebsdauer enthalten. Die Lebensdauerdaten des Gebläses 35 können beispielsweise Datumsinformationen und/oder Gesamtbetriebsdauer und/oder eine oder mehrere Betriebsdauern in definierten Betriebszuständen (z.B. Drehzahlzuständen oder Schrittmotorklassen oder Lastzuständen) enthalten. Zusätzlich oder alternativ können die Nutzdaten N auch aktuelle und/oder historische Sensordaten des wenigstens einen Sensors 41, 42 enthalten.

Beim Ausführungsbeispiel weist jeder Datensatz DS1, DS2, DS3 zusätzlich zu den Nutzdaten N einen Prüfwert P auf. Der Prüfwert P wird aus den Nutzdaten N bzw. zumindest einem Teil der Nutzdaten N anhand einer vorgegebenen Rechenvorschrift C ermittelt. Beispielsweise kann der Prüfwert P basierend auf einem zyklischen Redundanzverfahren ("Cyclic Redundancy Check (CRC)") ermittelt werden. Auch andere Prüfwerte bzw. Prüfsummen können durch die Rechenvorschrift C ermittelt werden, beispielsweise durch Bilden der Quersumme und/oder eines Paritätsbits und/oder eine Hashfunktion (z.B. "Secure Hash Algorithm (SHA)"). Beim Bilden des Prüfwerts P können sämtliche bekannte mathematische und/oder kryptographische Rechenvorschriften C eingesetzt werden.

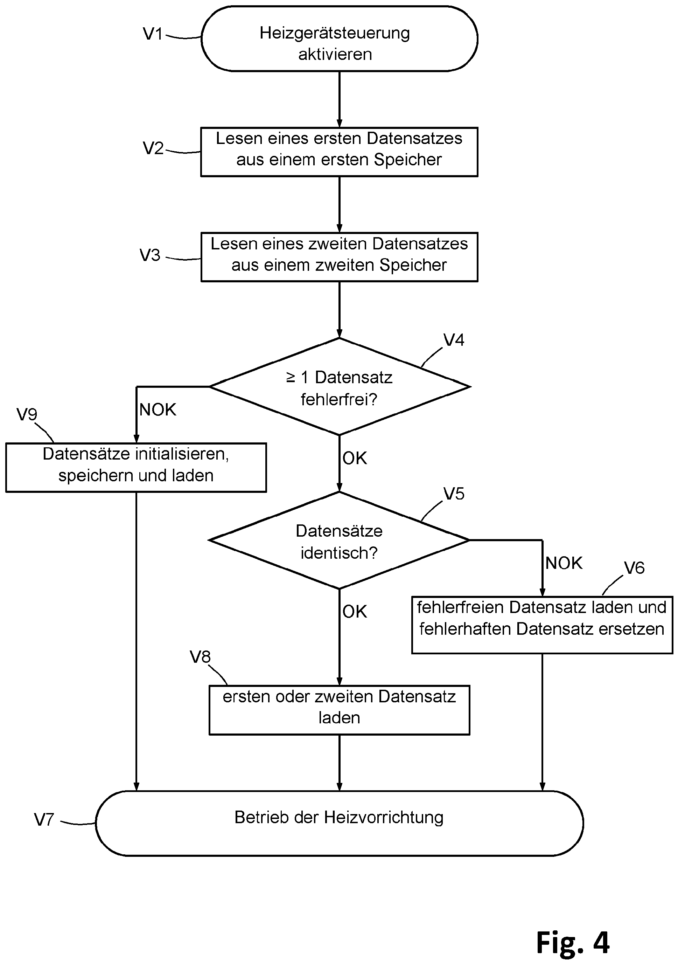

Die vorstehend beschriebenen Ausführungsbeispiele der Heizvorrichtung 10 weisen somit in zumindest zwei Speichern oder auch drei oder mehr Speicher jeweils einen Datensatz DS1, DS2, DS3 auf, wobei es das Ziel ist, dass die Nutzdaten N, insbesondere die Lebensdauerdaten Q, redundant in den Datensätzen vorhanden sind. Bei fehlerfreier Speicherung und Übertragung sind die Datensätze DS1, DS2, DS3 identisch. Wird somit eine Steuereinheit, beispielsweise die erste Steuereinheit 12, im Rahmen einer Instandsetzung, Wartung oder Reparatur ersetzt, können die Nutzdaten N aus den wenigstens einen weiteren Speicher, beispielsweise dem zweiten Speicher 38, wiedergewonnen werden, beispielsweise Lebensdauerdaten Q von nicht ausgetauschten Komponenten der Heizvorrichtung 10. Hierfür kann die neue Steuereinheit 12, die dann in ihrem ersten Speicher 15 keinen gültigen ersten Datensatz DS1 aufweist, über den Datenbus 40 oder eine andere geeignete Kommunikationsverbindung auf die zweite Steuereinheit 37 bzw. den zweiten Speicher 38 zugreifen. Dies kann bei der Inbetriebnahme der ersten Steuereinheit 12 ausgeführt werden. In Figur 4 ist ein Flussdiagramm eines bevorzugten Verfahrens veranschaulicht, das nachfolgend erläutert wird.

In einem ersten Verfahrensschritt V1 wird die Steuerung aktiviert, beispielsgemäß die erste Steuereinheit 12, die zweite Steuereinheit 37 und die Bedienschnittstelle 48, sowie gegebenenfalls die optional vorhandene dritte Steuereinheit 45. In einem zweiten Verfahrensschritt V2 wird der erste Datensatz DS1 aus dem ersten Speicher 15 ausgelesen. Unter der Annahme, dass die erste Steuereinheit 12 neu ist, enthält der erste Speicher 15 keine gültigen Daten im ersten Datensatz DS1, beispielsweise durchgängig den Wert Null als Nutzdaten N oder einen anderen als ungültig identifizierbaren Nutzdateninhalt. Gleichzeitig, vorher oder nachher wird in einem dritten Verfahrensschritt V3 der zweite Datensatz DS2 aus dem zweiten Speicher 38 gelesen. Optional können zeitgleich, vorher oder nachher auch wenigstens ein weiterer Datensatz eingelesen werden, beispielsweise der dritte Datensatz DS3.

Auch wenn eine andere Steuereinheit ausgetauscht wurde, beispielsweise die zweite Steuereinheit 37, sind dort im Speicher zunächst als ungültig identifizierbare Nutzdaten vorhanden, analog zu der vorstehenden Beschreibung.

In einem vierten Verfahrensschritt V4 werden die zumindest zwei Datensätze, beispielsgemäß der erste Datensatz DS1 und der zweite Datensatz DS2 individuell, separat auf Fehlerfreiheit geprüft, d.h. darauf geprüft, ob das Speichern und das Übertragen des Datensatzes DS1, DS2 fehlerfrei war und der Datensatz DS1, DS2 daher korrekt ist. Hierzu wird anhand der bekannten Rechenvorschrift C basierend auf zumindest einem Teil der Nutzdaten N bzw. alle Nutzdaten N des betreffenden Datensatzes DS1, DS2 der Prüfwert P berechnet und mit dem im Datensatz DS1 bzw. DS2 enthaltenen Prüfwert verglichen. Stimmen der berechnete Prüfwert P und der im Datensatz DS1 bzw. DS2 enthaltene Prüfwert P überein, wird festgestellt, dass der zugeordnete Datensatz DS1 bzw. DS2 korrekt ist (Verzweigung OK aus dem vierten Verfahrensschritt V4). Wenn zumindest einer der gelesenen Datensätze DS1, DS2 fehlerfrei bzw. korrekt ist, wird das Verfahren anschließend in einem fünften Verfahrensschritt V5 fortgesetzt. In diesem fünften Verfahrensschritt V5 werden die eingelesenen Datensätze DS1, DS2 miteinander verglichen und geprüft, ob die Datensätze identisch sind. Dies kann nur dann der Fall sein, wenn alle Datensätze im vierten Verfahrensschritt V4 als korrekt erkannt wurden.

Ist lediglich ein Teil der Datensätze korrekt, so sind die Datensätze nicht identisch (Verzweigung NOK aus dem fünften Verfahrensschritt V5) und in einem sechsten Verfahrensschritt V6 wird der fehlerfreie, korrekte Datensatz in die erste Steuereinheit 12 geladen (z.B. im Arbeitsspeicher des ersten Mikrocontrollers 16) und der wenigstens eine fehlerhafte Datensatz wird durch den korrekten Datensatz ersetzt, so dass die Datensätze DS1, DS2 (und optional DS3) wieder identisch sind. Anschließend kann in einem siebten Verfahrensschritt V7 der Betrieb der Heizvorrichtung 10 gestartet werden.

Wird im fünften Verfahrensschritt V5 festgestellt, dass die gelesenen Datensätze identisch sind (Verzweigung OK aus dem fünften Verfahrensschritt V5), bedeutet dies, dass der erste Datensatz DS1 und der zweite Datensatz DS2 jeweils korrekt sind und miteinander übereinstimmen. Der erste oder der zweite Datensatz kann in den Arbeitsspeicher des ersten Mikrocontrollers 16 geladen werden (achter Verfahrensschritt V8) und anschließend kann das Verfahren mit dem Betrieb der Heizvorrichtung 10 im siebten Verfahrensschritt V7 fortgesetzt werden.

Wird im vierten Verfahrensschritt V4 anhand des beschriebenen Prüfwertvergleichs festgestellt, dass keiner der vorhandenen Datensätze DS1, DS2 (und optional DS3) korrekt ist (Verzweigung NOK aus dem vierten Verfahrensschritt V4), wird in einem neunten Verfahrensschritt V9 das Initialisieren neuer Nutzdaten N und mithin neuer Datensätze DS1, DS2 (und optional DS3) durchgeführt. Dazu können beispielsweise Standardeinstellungen oder Werkseinstellungen für die Nutzdaten N verwendet werden, die entweder in einem Speicherbereich des ersten Speichers 15 hinterlegt sind oder automatisch oder manuell über die Bedienschnittstelle 48 bereitgestellt werden. Nach dem Initialisieren im neunten Verfahrensschritt V9 kann das Verfahren dann im siebten Verfahrensschritt V7 mit dem Betrieb der Heizvorrichtung 10 fortgesetzt werden.

Die Speicher 15, 38 sind Bestandteil separat handhabbarer und austauschbarer Baueinheiten. Vorzugsweise sind die erste Steuereinheit 12 und die zweite Steuereinheit 37 durch jeweils eine Baueinheit gebildet. Jede Baueinheit kann dazu einen Träger, insbesondere wenigstens einer Leiterplatte, und unmittelbar auf dem Träger angeordnete Bauteile aufweisen. Auf dem Träger können daher der erste Mikrocontroller 16 oder zweite Mikrocontroller 39, der jeweils zugeordnete erste Speicher 15 oder zweite Speicher 38 und optional weitere elektrische und/oder elektronische Bauteile angeordnet sein, wie z.B. eine Datenbusschnittstelle.

Der zweite Speicher 38 kann Bestandteil des Gebläses 35, und/oder der erste Speicher 15 Bestandteil des Heizgeräts 11 bzw. dessen Steuerung sein. Es werden letztlich die Nutzdaten N aus den Speichern 12, 38 unter den betreffenden Komponenten 11, 14, 35 bzw. Baugruppen der Heizvorrichtung 10 abgeglichen und/oder ausgetauscht.

Die Erfindung betrifft eine Heizvorrichtung 10 sowie ein Verfahren zum Betrieb der Heizvorrichtung 10. Die Heizvorrichtung 10 hat zur Steuerung eines Heizgerätes 11 eine erste Steuereinheit 12 mit einem nicht flüchtigen ersten Speicher 15. Zur Steuerung einer Komponente oder Baugruppe der Heizvorrichtung 10, beispielsweise eines Gebläses 35, hat die Heizvorrichtung 10 eine zweite Steuereinheit 37 mit einem nicht flüchtigen zweiten Speicher 38. Wenn die Steuerung der Heizvorrichtung 10 bei einer Inbetriebnahme aktiviert wird, kann wenigstens eine Steuereinheit und insbesondere die erste Steuereinheit 12 die folgenden Schritte ausführen: Aus dem ersten Speicher 15 wird ein erster Datensatz DS1 gelesen und aus dem zweiten Speicher 37 wird ein zweiter Datensatz DS2 gelesen. Die Datensätze DS1, DS2 werden auf ihre Korrektheit geprüft, beispielsweise durch ein Prüfwertverfahren und/oder durch einen Vergleich. Wird kein korrekter Datensatz DS1, DS2 erkannt, werden neue Datensätze DS1, DS2 erstellt. Wenn zumindest einer der gelesenen Datensätze DS1, DS2 korrekt ist, wird der nicht korrekte Datensatz durch den korrekten Datensatz ersetzt und den betreffenden Speicher 15, 38 abgespeichert.

### Bezugszeichenliste:

- 10: Heizvorrichtung
- 11: Heizgerät
- 12: erste Steuereinheit
- 13: Brenner
- 14: Ventileinheit
- 15: erster Speicher
- 16: erster Mikrocontroller

- 20: Brennraum
- 21: Gehäuse
- 22: Zufuhröffnung
- 23: Heizkreislauf
- 24: erste Wärmeübertragereinheit
- 25: zweite Wärmeübertragereinheit
- 26: Zulaufleitung
- 27: Rücklaufleitung
- 28: Wärmeabgabeanordnung

- 32: erste Zone
- 33: zweite Zone
- 34: Abgaskanal
- 35: Gebläse
- 36: Kondensatablauf
- 37: zweite Steuereinheit
- 38: zweiter Speicher
- 39: zweiter Mikrocontroller
- 40: Datenbus
- 41: Abgassensor
- 42: Verbrennungssensor
- 45: dritte Steuereinheit
- 46: dritter Speicher
- 47: dritter Mikrocontroller
- 48: Bedienschnittstelle

- B: Brennstoff
- C: Rechenvorschrift
- DS1: erster Datensatz
- DS2: zweiter Datensatz
- DS3: dritter Datensatz
- G: Verbrennungsgas
- K: Kondensat
- L: Luft
- N: Nutzdaten
- P: Prüfwert
- Q: Lebensdauerdaten
- S: Steuerdaten
- V1: erster Verfahrensschritt
- V2: zweiter Verfahrensschritt
- V3: dritter Verfahrensschritt
- V4: vierter Verfahrensschritt
- V5: fünfter Verfahrensschritt
- V6: sechster Verfahrensschritt
- V7: siebter Verfahrensschritt
- V8: achter Verfahrensschritt
- V9: neunter Verfahrensschritt
- W: Wärmeträgermedium

## Patentansprüche

1. Heizvorrichtung (10) aufweisend:
- ein Heizgerät (11) aufweisend einen Brenner (13),
- eine erste Steuereinheit (12) aufweisend einen nicht-flüchtigen ersten Speicher (15), wobei die erste Steuereinheit (12) zur Steuerung des Heizgeräts (11) eingerichtet ist, wobei die erste Steuereinheit (12) und der zugeordnete erste Speicher (15) eine separat austauschbare Baugruppe bilden,
- eine zweite Steuereinheit (37) aufweisend einen nicht-flüchtigen zweiten Speicher (38), wobei die zweite Steuereinheit (37) zur Steuerung einer Komponente oder Baugruppe der Heizvorrichtung (10) eingerichtet ist, wobei die zweite Steuereinheit (37) und der zugeordnete zweite Speicher (38) eine weitere separat austauschbare Baugruppe bilden,
wobei die erste Steuereinheit (12) dazu eingerichtet ist, nach ihrer Aktivierung nach der Erstinstallation oder im Anschluss an eine Instandhaltung oder Reparatur folgende Schritte auszuführen:
- Lesen eines ersten Datensatzes (DS1) aus dem ersten Speicher (15),
- Lesen eines zweiten Datensatzes (DS2) aus dem zweiten Speicher (38),
- Durchführen einer Prüfung, ob zumindest einer der Datensätze (DS1, DS2) fehlerfrei gespeichert und übertragen wurde und somit korrekt ist, wobei jeder Datensatz (DS1, DS2) separat durch ein Prüfwertverfahren geprüft wird,
- wenn kein korrekter Datensatz (DS1, DS2) erkannt wurde, Erstellen des ersten Datensatzes (DS1) und des zweiten Datensatzes (DS2) basierend auf Standard- oder Werkseinstellungen und/oder Initialisierungsabläufen und Speichern des ersten Datensatzes (DS1) und des zweiten Datensatzes (DS2), und
- wenn ein korrekter und ein nicht korrekter Datensatz (DS1, DS2) erkannt wurde, Ersetzen des nicht korrekten Datensatzes (DS1 oder DS2) durch den korrekten Datensatzes (DS2 oder DS1).

2. Heizvorrichtung nach Anspruch 1, die außerdem ein Gebläse (35) zur Erzeugung einer Gasströmung durch das Heizgerät (11) aufweist, wobei die zweite Steuereinheit (37) zur Steuerung des Gebläses (35) eingerichtet ist.

3. Heizvorrichtung nach Anspruch 2, wobei die zweite Steuereinheit (37) Bestandteil eines Gebläses (35) ist.

4. Heizvorrichtung nach einem der vorhergehenden Ansprüche, wobei die erste Steuereinheit (12) Bestandteil des Heizgeräts (11) und/oder einer Bedienschnittstelle (48) ist.

5. Heizvorrichtung nach einem der vorhergehenden Ansprüche, wobei jeder Datensatz (DS1, DS2) Steuerdaten (S) für den Betrieb des Heizgeräts (11) enthält und wobei die erste Steuereinheit (12) dazu eingerichtet ist, nach ihrer Aktivierung außerdem folgende Schritte auszuführen:
- wenn bei der Prüfung ein korrekter Datensatz (DS1 und/oder DS2) erkannt wurde, Laden des korrekten Datensatzes (DS1 oder DS2) und wenn bei der Prüfung kein korrekter Datensatz (DS1, DS2) erkannt wurde, Laden des neu erstellten Datensatzes (DS1, DS2),
- Verwenden der Steuerdaten (S) des geladenen Datensatzes (DS1, DS2) in der ersten Steuereinheit (12) zum Betrieb des Heizgeräts (11).

6. Heizvorrichtung nach einem der vorhergehenden Ansprüche, wobei die erste Steuereinheit (12) dazu eingerichtet ist, den aktuell in der ersten Steuereinheit (12) zum Betrieb des Heizgeräts (11) verwendeten Datensatz auf Anforderung zu ändern.

7. Heizvorrichtung nach Anspruch 6, wobei die Anforderung über eine Bedienschnittstelle (48) erzeugt werden kann.

8. Heizvorrichtung nach Anspruch 6 oder 7, wobei die erste Steuereinheit (12) dazu eingerichtet ist, den geänderten Datensatz als ersten Datensatz (DS1) im ersten Speicher (15) und als zweiten Datensatz (DS2) im zweiten Speicher (38) abzuspeichern.

9. Heizvorrichtung nach einem der vorhergehenden Ansprüche, wobei die erste Steuereinheit (12) dazu eingerichtet ist, während des Betriebs der Heizvorrichtung (10) regelmäßig oder nach dem Empfang eines entsprechenden Signals, die Daten des ersten Datensatzes (DS1) und des zweiten Datensatzes (DS2) zu aktualisieren.

10. Heizvorrichtung nach einem der vorhergehenden Ansprüche, wobei jeder Datensatz (DS1, DS2) Lebensdauerdaten (Q) wenigstens einer Komponente des Heizvorrichtung (10) enthält.

11. Heizvorrichtung nach einem der vorhergehenden Ansprüche, wobei das Heizgerät (11) eine Ventileinheit (14) zur Steuerung einer Brennstoffzufuhr zum Brenner (13) aufweist.

12. Heizvorrichtung nach Anspruch 10 und 11, wobei jeder Datensatz Lebensdauerdaten (Q) der Gasventileinheit (14) enthält.

13. Verfahren zum Betreiben einer Heizvorrichtung (10) aufweisend ein Heizgerät (11) mit einem Brenner (13), eine separat austauschbare Baugruppe aufweisend eine erste Steuereinheit (12) für das Heizgerät (11) und einen der ersten Steuereinheit (12) zugeordneten ersten Speicher (14), eine weitere separat austauschbare Baugruppe aufweisend eine zweite Steuereinheit (37) für eine Komponente oder Baugruppe der Heizvorrichtung (10) und einen der zweiten Steuereinheit (37) zugeordneten zweiten Speicher (38), wobei das Verfahren folgende Schritte umfasst:
- Aktivieren der ersten Steuereinheit (12) nach der Erstinstallation oder im Anschluss an eine Instandhaltung oder Reparatur,
- Lesen eines ersten Datensatzes (DS1) aus dem ersten Speicher (15),
- Lesen eines zweiten Datensatzes (DS2) aus dem zweiten Speicher (38),
- Durchführen einer Prüfung, ob zumindest einer der Datensätze (DS1, DS2) fehlerfrei gespeichert und übertragen wurde und somit korrekt ist, wobei jeder Datensatz (DS1, DS2) separat durch ein Prüfwertverfahren geprüft wird,
- wenn kein korrekter Datensatz (DS1, DS2) erkannt wurde, Erstellen des ersten Datensatzes (DS1) und des zweiten Datensatzes (DS2) basierend auf Standard- oder Werkseinstellungen und/oder Initialisierungsabläufen und Speichern des ersten Datensatzes (DS1) und des zweiten Datensatzes (DS2), und
- wenn ein korrekter und ein nicht korrekter Datensatz (DS1) erkannt wurde, Ersetzen des nicht korrekten Datensatzes (DS1 oder DS2) durch den korrekten Datensatz (DS2 oder DS1).

## Claims

1. A heating device (10) comprising:
- a heating appliance (11) having a burner (13),
- a first control unit (12) having a non-volatile first memory (15), wherein the first control unit (12) is arranged to control the heating appliance (11), wherein the first control unit (12) and the associated first memory (15) form a separately exchangeable assembly,
- a second control unit (37) having a non-volatile second memory (38), wherein the second control unit (37) is arranged to control a component or assembly of the heating device (10), wherein the second control unit (37) and the associated second memory (38) form a further separately exchangeable assembly,
wherein the first control unit (12) is arranged to perform the following steps after its activation following initial installation or following maintenance or repair:
- reading a first data set (DS1) from the first memory (15),
- reading a second data set (DS2) from the second memory (38),
- performing a check to determine whether at least one of the data sets (DS1, DS2) has been stored and transmitted without errors and is therefore correct, whereby each data set (DS1, DS2) is checked separately using a check value procedure,
- if no correct data set (DS1, DS2) was detected, creating the first data set (DS1) and the second data set (DS2) based on default or factory settings and/or initialization sequences and storing the first data set (DS1) and the second data set (DS2), and
- if one correct and one incorrect data set (DS1, DS2) was detected, replacing the incorrect data set (DS1 or DS2) with the correct data set (DS2 or DS1).

2. The heating device according to claim 1, further comprising a fan (35) for generating a gas flow through the heating appliance (11), wherein the second control unit (37) is arranged to control the fan (35).

3. The heating device according to claim 2, wherein the second control unit (37) is part of a fan (35).

4. The heating device according to one of the preceding claims, wherein the first control unit (12) is part of the heating appliance (11) and/or an operating interface (48).

5. The heating device according to one of the preceding claims, wherein each data set (DS1, DS2) contains control data (S) for the operation of the heating appliance (11) and wherein the first control unit (12) is arranged to also perform the following steps after its activation:
- if a correct data set (DS1 and/or DS2) was detected during the check, loading the correct data set (DS1 or DS2) and if no correct data set (DS1, DS2) was detected during the test, loading the newly created data set (DS1, DS2),
- using the control data (S) of the loaded data set (DS1, DS2) in the first control unit (12) to operate the heating appliance (11).

6. The heating device according to one of the preceding claims, wherein the first control unit (12) is arranged to change the data set currently used in the first control unit (12) for operating the heating appliance (11) upon request.

7. The heating device according to claim 6, wherein the request can be generated via an operating interface (48) .

8. The heating device according to claim 6 or 7, wherein the first control unit (12) is arranged to store the changed data set as a first data set (DS1) in the first memory (15) and as a second data set (DS2) in the second memory (38).

9. The heating device according to one of the preceding claims, wherein the first control unit (12) is arranged to update the data of the first data set (DS1) and the second data set (DS2) during operation of the heating device (10) regularly or after receiving a corresponding signal.

10. The heating device according to one of the preceding claims, wherein each data set (DS1, DS2) contains service life data (Q) of at least one component of the heating device (10).

11. The heating device according to one of the preceding claims, wherein the heating appliance (11) has a valve unit (14) for controlling a fuel supply to the burner (13) .

12. The heating device according to claims 10 and 11, wherein each data set contains service life data (Q) of the gas valve unit (14).

13. A method for operating a heating device (10) comprising a heating appliance (11) with a burner (13), a separately exchangeable assembly comprising a first control unit (12) for the heating appliance (11) and a first memory (14) assigned to the first control unit (12), a further separately exchangeable assembly comprising a second control unit (37) for a component or assembly of the heating device (10) and a second memory (38) assigned to the second control unit (37), the method comprising the following steps:
- activating the first control unit (12) after initial installation or following maintenance or repair,
- reading a first data set (DS1) from the first memory (15),
- reading a second data set (DS2) from the second memory (38),
- performing a check to determine whether at least one of the data sets (DS1, DS2) has been stored and transmitted without errors and is therefore correct, whereby each data set (DS1, DS2) is checked separately using a check value procedure,
- if no correct data set (DS1, DS2) was detected, creating the first data set (DS1) and the second data set (DS2) based on default or factory settings and/or initialization sequences and storing the first data set (DS1) and the second data set (DS2), and
- if one correct and one incorrect data set (DS1) was detected, replacing the incorrect data set (DS1 or DS2) with the correct data set (DS2 or DS1).

## Revendications

1. Dispositif de chauffage (10) comprenant :
- un appareil de chauffage (11) présentant un brûleur (13),
- une première unité de commande (12) présentant une première mémoire (15) non volatile, la première unité de commande (12) étant conçue pour commander l'appareil de chauffage (11), la première unité de commande (12) et la première mémoire (15) associée formant un module susceptible d'être remplacé séparément,
- une deuxième unité de commande (37) présentant une deuxième mémoire (38) non volatile, la deuxième unité de commande (37) étant conçue pour commander un composant ou module du dispositif de chauffage (10), la deuxième unité de commande (37) et la deuxième mémoire (38) associée formant un autre module susceptible d'être remplacé séparément,
dans lequel la première unité de commande (12) est conçue pour réaliser les étapes suivantes, après son activation après la première installation ou à la suite d'un entretien ou d'une réparation :
- lecture d'un premier ensemble de données (DS1) dans la première mémoire (15),
- lecture d'un deuxième ensemble de données (DS2) dans la deuxième mémoire (38),
- réalisation d'un contrôle pour déterminer si au moins un des ensembles de données (DS1, DS2) a été enregistré et transmis sans erreur et est donc correct, chaque ensemble de données (DS1, DS2) étant contrôlé séparément par une procédure de valeur de contrôle,
- si aucun ensemble de données (DS1, DS2) correct n'a été détecté, création du premier ensemble de données (DS1) et du deuxième ensemble de données (DS2), sur la base de réglages standard ou usine et/ou de séquences d'initialisation, et enregistrement du premier ensemble de données (DS1) et du deuxième ensemble de données (DS2), et
- si un ensemble de données correct et un ensemble de données non correct (DS1, DS2) ont été détectés, remplacement de l'ensemble de données (DS1 ou DS2) non correct par l'ensemble de données (DS2 ou DS1) correct.

2. Dispositif de chauffage selon la revendication 1, comprenant en outre un ventilateur (35) destiné à créer un flux de gaz à travers l'appareil de chauffage (11), la deuxième unité de commande (37) étant conçue pour commander le ventilateur (35).

3. Dispositif de chauffage selon la revendication 2, dans lequel la deuxième unité de commande (37) fait partie intégrante d'un ventilateur (35).

4. Dispositif de chauffage selon une des revendications précédentes, dans lequel la première unité de commande (12) fait partie intégrante de l'appareil de chauffage (11) et/ou d'une interface utilisateur (48).

5. Dispositif de chauffage selon une des revendications précédentes, dans lequel chaque ensemble de données (DS1, DS2) comporte des données de commande (S) pour le fonctionnement de l'appareil de chauffage (11), et dans lequel la première unité de commande (12) est conçue pour exécuter en outre les étapes suivantes après son activation :
- si un ensemble de données (DS1 et/ou DS2) correct a été détecté lors du contrôle, chargement de l'ensemble de données (DS1 ou DS2) correct, et si aucun ensemble de données (DS1, DS2) correct n'a été détecté lors du contrôle, chargement de l'ensemble de données (DS1, DS2) nouvellement créé,
- utilisation des données de commande (S) de l'ensemble de données (DS1, DS2) chargé, dans la première unité de commande (12), en vue du fonctionnement de l'appareil de chauffage (11).

6. Dispositif de chauffage selon une des revendications précédentes, dans lequel la première unité de commande (12) est conçue pour modifier sur demande l'ensemble de données actuellement utilisé dans la première unité de commande (12) pour le fonctionnement de l'appareil de chauffage (11).

7. Dispositif de chauffage selon la revendication 6, dans lequel la demande peut être générée par l'intermédiaire d'une interface utilisateur (48).

8. Dispositif de chauffage selon la revendication 6 ou 7, dans lequel la première unité de commande (12) est conçue pour enregistrer l'ensemble de données modifié, en tant que premier ensemble de données (DS1) dans la première mémoire (15) et en tant que deuxième ensemble de données (DS2) dans la deuxième mémoire (38).

9. Dispositif de chauffage selon une des revendications précédentes, dans lequel la première unité de commande (12) est conçue pour mettre à jour les données du premier ensemble de données (DS1) et du deuxième ensemble de données (DS2), régulièrement pendant le fonctionnement du dispositif de chauffage (10) ou après réception d'un signal correspondant.

10. Dispositif de chauffage selon une des revendications précédentes, dans lequel chaque ensemble de données (DS1, DS2) comporte des données de durée de vie (Q) d'au moins un composant du dispositif de chauffage (10).

11. Dispositif de chauffage selon une des revendications précédentes, dans lequel l'appareil de chauffage (11) présente une unité de valve (14) destinée à contrôler une alimentation en combustible du brûleur (13).

12. Dispositif de chauffage selon la revendication 10 et 11, dans lequel chaque ensemble de données contient des données de durée de vie (Q) de l'unité de valve à gaz (14).

13. Procédé de fonctionnement d'un dispositif de chauffage (10) comprenant un appareil de chauffage (11) doté d'un brûleur (13), un module pouvant être remplacé séparément et présentant une première unité de commande (12) pour l'appareil de chauffage (11) et une première mémoire (14) associée à la première unité de commande (12), un autre module pouvant être remplacé séparément et présentant une deuxième unité de commande (37) pour un composant ou module du dispositif de chauffage (10) et une deuxième mémoire (38) associée à la deuxième unité de commande (37), le procédé comprenant les étapes suivantes :
- activation de la première unité de commande (12) après la première installation ou à la suite d'un entretien ou d'une réparation,
- lecture d'un premier ensemble de données (DS1) dans la première mémoire (15),
- lecture d'un deuxième ensemble de données (DS2) dans la deuxième mémoire (38),
- réalisation d'un contrôle pour déterminer si au moins un des ensembles de données (DS1, DS2) a été enregistré et transmis sans erreur et est donc correct, chaque ensemble de données (DS1, DS2) étant contrôlé séparément par une procédure de valeur de contrôle,
- si aucun ensemble de données (DS1, DS2) correct n'a été détecté, création du premier ensemble de données (DS1) et du deuxième ensemble de données (DS2), sur la base de réglages standard ou usine et/ou de séquences d'initialisation, et enregistrement du premier ensemble de données (DS1) et du deuxième ensemble de données (DS2), et
- si un ensemble de données correct et un ensemble de données non correct (DS1) ont été détectés, remplacement de l'ensemble de données (DS1 ou DS2) non correct par l'ensemble de données (DS2 ou DS1) correct.
